# EUROPÄISCHE PATENTSCHRIFT

(11) **EP 3 272 203 B1**
(45) Veröffentlichungstag und Bekanntmachung des Hinweises auf die Patenterteilung: **18.09.2019**
(21) Anmeldenummer: 17181065.8
(22) Anmeldetag: 12.07.2017
(51) Int. Cl.: A01D 90/08

(54) **TRANSPORTEINRICHTUNG FÜR RUNDBALLEN**
TRANSPORT DEVICE FOR ROUND BALES
DISPOSITIF DE TRANSPORT POUR BALLES RONDES

(30) Priorität: 21.07.2016 AT 506662016
(43) Veröffentlichungstag der Anmeldung: 24.01.2018
(73) Patentinhaber: Fliegl Abda Gépgyártó Kft., 9151 Abda Pillingerpuszta (HU)
(72) Erfinder: KITZMÜLLER, Robert, 4040 Linz (AT)
(74) Vertreter: Nußbaum, Christopher

(56) Entgegenhaltungen:
- EP-A1- 0 391 804
- US-A- 3 942 666
- US-A- 4 050 598
- US-A- 4 182 590

## Beschreibung

### GEBIET DER ERFINDUNG

Die Erfindung betrifft eine Transporteinrichtung für Rundballen zur Koppelung mit einem, vorzugsweise landwirtschaftlichen, Nutzfahrzeug, gemäß dem Oberbegriff von Anspruch 1.

### STAND DER TECHNIK

In der landwirtschaftlichen Praxis werden etwa Futterballen zum Silieren luftdicht mit Hüllfolien umwickelt. Dieses Umwickeln wird mit eigenen Geräten zumeist bereits am Feld durchgeführt. Die mit Folien umwickelten Silageballen weisen Durchmesser von über einem Meter auf, und werden mit eigenen Transportgabeln transportiert. Die Silageballen können dabei als so genannte Rundballen drehzylinderförmig ausgeführt sein, oder quaderförmig als so genannte Quaderballen.

Insbesondere zum Transport von Rundballen sind eigene Transportgabeln vorgesehen, die abnehmbar an einem landwirtschaftlichen Nutzfahrzeug montierbar sind. Mittels der Transportgabeln lassen sich in der Regel nur ein, zwei oder vier Silageballen gleichzeitig transportieren.

Ein Nachteil des Stands der Technik äußert sich darin, dass solche für den Transport von Rundballen vorgesehene Transportgabeln nicht für den Transport auf öffentlichen Straßen, insbesondere im Hinblick auf die Ladungssicherheit, ohne zusätzliche Sicherungseinrichtungen zulässig sind. Gleichermaßen können mittels Transportgabeln nur eine beschränkte Menge an Rundballen gleichzeitig transportiert werden. Für den Transport größerer Mengen an Rundballen ist es lediglich bekannt, diese auf einer Ladefläche eines Nutzfahrzeugs oder eines Anhängers aufzuschlichten und mit Hilfe von Zurrgurten abzuspannen, was mit einem hohen Arbeitsaufwand verbunden ist.

Eine gattungsgemäße Transporteinrichtung wurde in der US 3,942,666 beschrieben. Weitere Transporteinrichtungen wurden in der US 4,249,842, US 4,182,590, EP 0 391 804, US 4,050,598 und der US 4,938,646 beschrieben.

### AUFGABE DER ERFINDUNG

Es ist daher eine Aufgabe der Erfindung eine Transporteinrichtung für Rundballen vorzuschlagen, mittels welcher Rundballen auf öffentlichen Straßen transportiert werden können. Eine weitere Aufgabe kann darin gesehen werden, eine einfache Be- bzw. Entladung der Transporteinrichtung zu ermöglichen.

### DARSTELLUNG DER ERFINDUNG

Diese Aufgaben werden mit einer erfindungsgemäßen Transporteinrichtung für Rundballen gemäß Anspruch 1 gelöst. Anspruch 1 bezieht sich auf eine Transporteinrichtung für Rundballen umfassend eine sich in einer Längsrichtung erstreckende, eine Lagerfläche für die Rundballen bildende Fördereinheit, vorzugsweise einen Umlaufförderer oder eine Rollenbahn, mit einem käfigartigen Überbau zur Aufnahme mehrerer Rundballen und ein Anbindungselement zur Koppelung der Transporteinrichtung mit einem, vorzugsweise landwirtschaftlichen, Nutzfahrzeug umfasst, wobei die Transporteinrichtung eine an einem Ende der Lagerfläche angeordnete schwenkbare Aufgabeeinheit aufweist, mittels welcher Aufgabeeinheit ein Rundballen auf die Lagerfläche aufgebbar ist, und wobei ein auf der Lagerfläche befindlicher Rundballen mittels der Fördereinheit in Richtung des der Aufgabeeinheit entgegengesetzten Endes der Lagerfläche förderbar ist, wobei die Aufgabeeinheit einen L-förmigen Schwenkarm aufweist, welcher Schwenkarm um eine parallel zur Lagerfläche und normal zur Längsrichtung verlaufende erste Schwenkachse von einer Greifposition zum Untergreifen eines Rundballens in eine Aufgabeposition zur Aufgabe des untergriffenen Rundballens auf die Lagerfläche schwenkbar ist, wobei ein erster Schenkel des L-förmigen Schwenkarms parallel zur ersten Schwenkachse ausgerichtet ist. Erfindungsgemäß wird hierbei vorgeschlagen, dass der Schwenkarm um eine normal zur ersten Schwenkachse ausgerichtete zweite Schwenkachse von einer Aufnahmeposition , in der der Schwenkarm seitlich zur Förderfläche ausgeschwenkt ist, in die Greifposition schwenkbar ist.

Beim Transport von Rundballen und insbesondere bei der Be- und Entladung der Transporteinrichtung ist es zunächst entscheidend, dass die Hüllfolie nicht verletzt wird, um das Silieren des Futtermittelballens bzw. die Dichtheit zu gewährleisten. Um die Rundballen auf die Lagerfläche aufbringen zu können, ist daher an einem Ende der Lagerfläche eine schwenkbare Aufgabeeinheit vorgesehen, mittels der auf einem Untergrund aufliegende Rundballen auf die Lagerfläche aufgegeben werden können. Da die Transporteinrichtung üblicherweise zumindest einen Radsatz für den Straßentransport umfasst, ist die Lagerfläche in der Regel in Höhenrichtung vom Untergrund beabstandet.

Gemäß Anspruch 1 ist hierbei vorgesehen, dass die Aufgabeeinheit einen L-förmigen Schwenkarm aufweist, welcher Schwenkarm um eine parallel zur Lagerfläche und normal zur Längsrichtung verlaufende erste Schwenkachse von einer Greifposition zum Untergreifen eines Rundballens in eine Aufgabeposition zur Aufgabe des untergriffenen Rundballens auf die Lagerfläche schwenkbar ist, wobei ein erster Schenkel des L-förmigen Schwenkarms parallel zur ersten Schwenkachse ausgerichtet ist. Der um die erste Schwenkachse schwenkbare Schwenkarm stellt eine besonders einfache technische Umsetzung der Aufgabeeinheit dar. Ein erster Schenkel des L-förmigen Schwenkarms, vorzugsweise eine Querstange, ist dabei parallel zur ersten Schwenkachse ausgerichtet und ist für den Kontakt mit den Rundballen vorgesehen. Während der Bewegung von der Greifposition, in der der erste Schenkel des Schwenkarms einen der Transporteinrichtung abgewandten Abschnitt der Mantelfläche eines auf dem Untergrund angeordneten Rundballens kontaktiert, in die Aufgabeposition hebt der Schwenkarm den untergriffenen Rundballen auf die Lagerfläche. Sobald der Schwenkarm in der Aufgabeposition einen definierten Winkel mit der Lagerfläche einschließt, etwa von 80° bis 100°, insbesondere von 85° bis 95°, löst sich der Rundballen vom Schwenkarm und rollt auf die Lagerfläche. Spätestens wenn der Schwenkarm die Aufgabeposition erreicht hat, lässt sich der aufgegebene Rundballen über die Fördereinheit in Richtung des entgegengesetzten Endes der Lagerfläche fördern.

Da die aufzunehmenden Rundballen in der Regel einen Durchmesser von über einem Meter aufweisen, der Abstand zwischen einem Angelpunkt des Rundballens an der Aufgabeeinheit und dem ersten Schenkel des Schwenkarms jedoch kleiner sein muss als der Durchmesser des Rundballens, ist eine Bewegung des Schwenkarms von der Aufgabeposition in die Greifposition nicht ohne Weiteres möglich, wenn bereits ein aufzunehmender Rundballen entsprechend vor der Aufgabeeinheit positioniert ist, da dieser die Schwenkbewegung blockieren würde. Gleichzeitig müsste ein Rundballen mit zusätzlichen Hilfsmitteln über einen in die Greifposition verschwenkten Schwenkarm gerollt werden, wenn die Positionierung des Rundballens relativ zur Aufgabeeinheit erst nach dem Schwenken des Schwenkarms in die Greifposition erfolgt. Erfindungsgemäß ist daher vorgesehen, dass der Schwenkarm um eine normal zur ersten Schwenkachse ausgerichtete zweite Schwenkachse von einer Aufnahmeposition, in der der Schwenkarm seitlich zur Förderfläche ausgeschwenkt ist, in die Greifposition schwenkbar ist. Durch das seitliche Ausschwenken des Schwenkarms um die zweite Schwenkachse, die in der Regel während des Verschwenkens des Schwenkarms von der Aufnahmeposition in die Greifposition einen Winkel von zwischen 90° und 120° zur Lagerfläche einnimmt, vorzugsweise annährend senkrecht zur Lagerfläche ausgerichtet ist, kann in einfacher Art und Weise die Transporteinrichtung relativ zum Rundballen zunächst so positioniert werden, dass der Rundballen in der Aufnahmeposition vor der Aufgabeeinheit liegt. Nach der Positionierung wird der Schwenkarm von der Aufnahmeposition in die Greifposition verschwenkt, ohne dass der Rundballen dabei bewegt werden müsste. Es ist dabei denkbar, dass der Schwenkarm von der Greifposition in die Aufnahmeposition verschwenkbar und/oder von der Aufgabeposition in die Aufnahmeposition verschwenkbar ist.

Die erfindungsgemäße Transporteinrichtung vollzieht somit eine Aufnahmebewegung für Rundballen, bei der ein einziger L-förmiger Schwenkarm ausreicht und keine Gabeln, paarweise angeordnete Zinken und dergleichen erforderlich sind. Der L-förmige Schwenkarm kann folglich auch vor Aufnahme eines Rundballen um eine senkrechte Schwenkachse verschwenkt werden und in eine Greifposition gebracht werden, bei der der erste Schenkel den Rundballen untergreift. In weiterer Folge wird der L-förmige Schwenkarm um eine parallel zur Lagerfläche und normal zur Längsrichtung verlaufende erste Schwenkachse von der Greifposition zum Untergreifen des Rundballens in eine Aufgabeposition zur Aufgabe des untergriffenen Rundballens auf die Lagerfläche verschwenkt. Durch die erfindungsgemäße Ausführung der Aufgabeeinheit kann der Rundballen auf die Lagerfläche aufrollen, und raumgreifende Bewegungen des Rundballens werden vermieden. Die Aufnahme der Rundballen kann somit rascher und energieeffizienter erfolgen.

Zudem ist es mithilfe der erfindungsgemäßen Transporteinrichtung möglich, den Rundballen der Breite nach in Fahrtrichtung der Rundballenpresse aufzunehmen. Die Rundballenpresse legt die Rundballen nämlich transversal zu ihrer Fahrtrichtung ab, also mit einer zur Fahrtrichtung senkrechten Rollenachse. Bei herkömmlichen Ausführungen muss der Rundballen stets parallel zur Rollenachse und in Längsrichtung der Transporteinrichtung angefahren werden, also quer zur Fahrtrichtung der Rundballenpresse. Bei der erfindungsgemäßen Transporteinrichtung können die Rundballen hingegen senkrecht zur Rollenachse angefahren werden, also in Fahrtrichtung der Rundballenpresse, was den Aufnahmevorgang sehr erleichtert.

Um Rundballen über öffentliche Straßen transportieren zu können ohne weitere Sicherungseinrichtungen vorsehen zu müssen, weist die Transporteinrichtung des Weiteren eine Lagerfläche auf, auf der die Rundballen während des Transports aufliegen. Die Lagerfläche wird durch einen käfigartigen Überbau zumindest in seitlicher Richtung und vorzugsweise auch in Höhenrichtung umgeben, wobei der Überbau ein Hinunterfallen der Rundballen während des Transports verhindert. Der käfigartige Überbau kann beispielsweise zwei, vorzugsweise durch eine Reihe an Vertikal-Trägern ausgebildete, Seitenwände zur seitlichen Begrenzung der Lagerfläche umfassen. Vorzugsweise umfasst der käfigartige Überbau auch eine Mehrzahl an Querträgern, die die beiden Seitenwände miteinander verbinden und die Transporteinrichtung in Höhenrichtung begrenzen, um ein Herausrollen der Rundballen im Fall eines Umkippens der Transporteinrichtung zu verhindern.

Damit eine größere Anzahl an Rundballen, also beispielsweise drei, vier, fünf, sechs oder mehr Rundballen, mittels der Aufgabeeinheit auf die Lagerfläche aufgebbar und auf der Lagerfläche transportierbar sind ohne die Hüllfolien zu verletzen, ist die Lagerfläche durch eine Fördereinheit ausgebildet, mittels der die auf die Lagerfläche aufgegebenen Rundballen in Richtung des der Aufgabeeinheit gegenüberliegenden Endes der Lagerfläche förderbar sind. Die Fördereinheit kann beispielsweise über einen elektrischen Antrieb antreibbar sein und etwa als Umlaufförderer, beispielsweise als Gurtförderer, ausgebildet sein, sodass ein Rundballen nach der Aufgabe auf die Lagerfläche durch Aktivieren des Antriebs förderbar ist. Die Lagerfläche ist in diesem Fall durch ein die Förderfläche des Umlaufförderers ausbildendes Umlauffördermittel, also beispielsweise einen Gurt, gebildet. Im Falle einer Rollenbahn ist die Lagerfläche durch die Tangentialebene der Förderrollen der Fördereinheit ausgebildet.

Um das Hinunterfallen der Rundballen an dem der Aufgabeeinheit gegenüberliegenden Ende der Lagerfläche zu verhindern, kann an diesem Ende eine Rundballensperre, beispielsweise eine schrankenartige Sperreinheit oder ein türartiges Sperrelement, angeordnet sein.

Zum Schutz der Hüllfolie der Rundballen während des Transports auf der Transporteinrichtung bzw. während der Förderung der Rundballen von der Aufgabeeinheit zum entgegengesetzten Ende der Lagerfläche ist in einer Ausführungsvariante der Erfindung vorgesehen, dass an den Seitenwänden des käfigartigen Überbaus senkrecht zur Lagerfläche ausgerichtete Führungsrollen angeordnet sind. Durch die Führungsrollen können die Rundballen während ihrer Förderung leicht abrollen.

Eine weitere Ausführungsvariante der Erfindung sieht vor, dass das Anbindungselement um eine normal zur Lagerfläche ausgerichtete Anbindungsachse schwenkbar an der Transporteinrichtung angebunden ist. Durch das Anbindungselement kann die Transporteinrichtung mit einem Nutzfahrzeug, etwa einem Traktor, gekoppelt werden, wobei das Nutzfahrzeug beispielsweise als Zugfahrzeug für die Transporteinrichtung eingesetzt werden kann. Durch die schwenkbare Anbindung um die Anbindungsachse kann die Transporteinrichtung relativ zum Nutzfahrzeug verschwenkt werden, beispielsweise über Hydraulikzylinder. So kann etwa die Aufgabeeinheit zu einem auf dem Untergrund liegenden Rundballen durch Schwenkung der Transporteinrichtung um die Anbindungsachse ausgerichtet werden.

Um die Rundballen während des Aufgabevorgangs an der Transporteinrichtung abstützen zu können, ohne dabei die Hüllfolie zu verletzen, ist gemäß einer weiteren bevorzugten Ausführungsvariante der Erfindung vorgesehen, dass die Aufgabeeinheit eine parallel zur ersten Schwenkachse ausgerichtete Rolle zum Abrollen des Rundballens während des Aufgabevorgangs aufweist. Der Rundballen kontaktiert dabei zumindest während eines Teils des Aufgabevorgangs sowohl die Rolle als auch den Schwenkarm, sodass der Rundballen während der Verschwenkung des Schwenkarms um die erste Schwenkachse von der Greifposition in die Aufgabeposition an der Rolle abrollt. In anderen Worten ist zwischen der Rolle und der Querstange des Schwenkarms eine Aufnahmeöffnung für die Rundballen ausgebildet, wobei die lichte Weite zwischen der Rolle und dem ersten Schenkel des Schwenkarms kleiner ist als der Durchmesser des aufzugebenden Rundballens.

Eine weitere bevorzugte Ausführungsvariante der Erfindung sieht vor, dass der Schwenkarm zumindest zwei teleskopartig ineinander schiebbare Teleskopelemente umfasst. Dadurch kann der Schwenkarm individuell auf die Größe des aufzunehmenden Rundballens angepasst werden, indem die Teleskopelemente entweder ineinander geschoben werden um die lichte Weite der Aufgabeeinheit zu verringern, oder auseinander geschoben werden um die lichte Weite der Aufgabeeinheit zu vergrößern. In der Regel werden die Teleskopelemente relativ zueinander durch Fixiermittel wie Bolzen oder Stifte fixiert. Theoretisch ist es auch denkbar, die Teleskopelemente mittels eines Motors gegeneinander zu verschieben. Vorzugsweise ist der zweite Schenkel des L-förmigen Schwenkarms durch die Teleskopelemente ausgebildet, sodass der Abstand zwischen erstem Schenkel und erster Schwenkachse über die Teleskopelemente einstellbar ist.

Um die Lagerfläche in Längsrichtung zu versperren und zu verhindern, dass Rundballen während des Transports über das die Aufgabeeinheit aufweisende Ende der Lagerfläche aus der Transporteinrichtung fallen können, ist in einer weiteren bevorzugten Ausführungsvariante der Erfindung vorgesehen, dass der Schwenkarm in der Aufgabeposition eine Rundballensperre ausbildet. Wenn der Schwenkarm in der Aufgabeposition die Rundballensperre ausbildet, verschließt der erste Schenkel des Schwenkarms schrankenartig die für die Aufgabeeinheit notwendige Öffnung im käfigartigen Überbau.

In einer weiteren bevorzugten Ausführungsvariante der Erfindung ist vorgesehen, dass die Aufgabeeinheit pro Schwenkachse zumindest einen Hydraulikzylinder aufweist, um den Schwenkarm um die erste und/oder zweite Schwenkachse zu schwenken. Durch die Hydraulikzylinder kann das Verschwenken des Schwenkarms technisch in einfacher Art und Weise gelöst werden. Grundsätzlich sind auch Elektromotoren oder Getriebe denkbar.

Besonders vorteilhaft ist es, wenn die Transporteinrichtung eine weitere Aufgabeeinheit aufweist, über welche die Transporteinrichtung alternativ zur Aufgabeeinheit be- und entladbar ist. Die weitere Aufgabeeinheit ist dabei vorzugsweise analog zur Aufgabeeinheit ausgebildet. Daher ist in einer weiteren Ausführungsvariante der Erfindung vorgesehen, dass an dem der Aufgabeeinheit gegenüber liegenden Ende der Lagerfläche eine weitere Aufgabeeinheit angeordnet ist. Somit kann einerseits die Entladung in einfacher Art und Weise an dem der Aufgabeeinheit gegenüberliegenden Ende der Lagerfläche mittels der weiteren Aufgabeeinheit erfolgen. Gleichermaßen können auch über die weitere Aufgabeeinheit in der zuvor beschriebenen Art und Weise Rundballen auf die Lagerfläche aufgegeben werden. Vorteilhaft ist es dabei, wenn die Rundballen mittels der Fördereinheit auch in die entgegensetzte Richtung, also in Richtung der Aufgabeeinheit, förderbar sind.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Seitenansicht einer erfindungsgemäßen Transporteinrichtung;
- Fig. 2: eine Draufsicht der Transporteinrichtung;
- Fig. 3: eine Frontansicht der Transporteinrichtung;
- Fig. 4: eine dreidimensionale Ansicht der Transporteinrichtung;
- Fig. 5: eine dreidimensionale Detailansicht einer Aufgabeeinheit der Transporteinrichtung.

### WEGE ZUR AUSFÜHRUNG DER ERFINDUNG

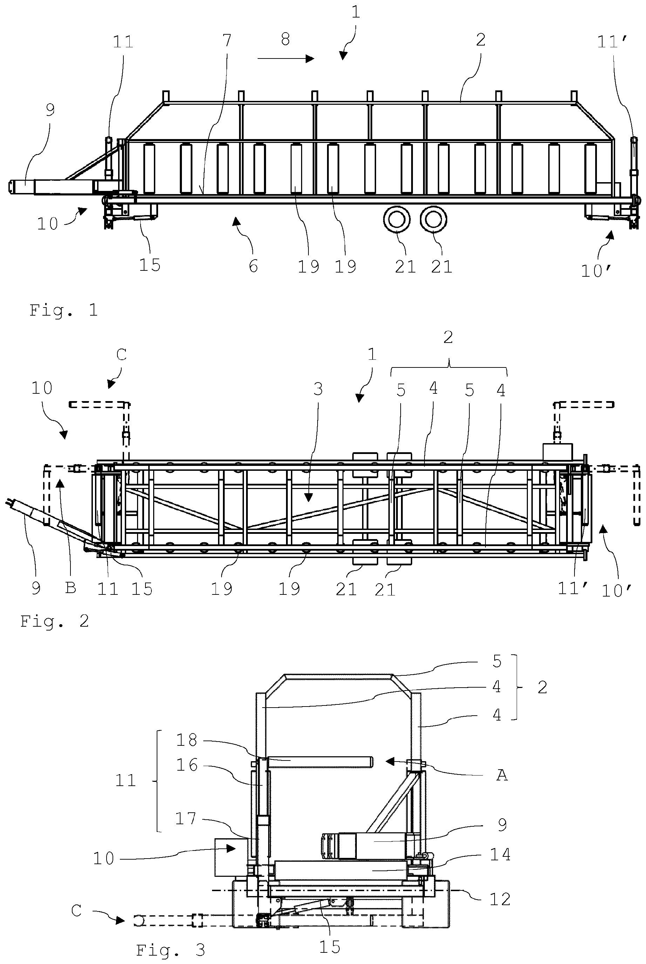

Die Figuren 1 bis 3 zeigen eine erfindungsgemäße Transporteinrichtung 1 für die Aufnahme und den Transport von Rundballen im landwirtschaftlichen Bereich in drei verschiedenen Ansichten. Die Transporteinrichtung 1 weist ein Rahmengestell 3 auf, welches durch ein Metallgestänge ausgebildet ist. Im Rahmengestell 3 ist eine Fördereinheit 6 verbaut, welche als Umlaufförderer, genauer als Gurtförderer, ausgebildet ist und eine Lagerfläche 7 aufweist, auf der die Rundballen gelagert werden können. Die Lagerfläche 7 wird in seitlicher Richtung und in Höhenrichtung von einem käfigartigen Überbau 2 umschlossen, der einerseits ein Aufnahmevolumen für die Rundballen begrenzt, und andererseits die Ladungssicherheit gewährleistet, um zu verhindern, dass Rundballen während des Transports unbeabsichtigt aus der Transporteinrichtung 1 herausfallen können.

Der käfigartige Überbau 2 umfasst dabei im vorliegenden Ausführungsbeispiel zwei Seitenwände 4, welche die Lagerfläche 7 jeweils seitlich begrenzen (siehe Fig. 2) und eine Mehrzahl an Querträgern 5, die die beiden Seitenwände 4 verbinden und das Aufnahmevolumen nach oben hin begrenzen. Der Übersichtlichkeit halber sind in der Figur 2 nur zwei der sieben Querträger 5 mit einem Bezugszeichen versehen.

An einem Ende der Lagerfläche 7 ist eine Aufgabeeinheit 10 angeordnet, mittels derer wie nachfolgend beschrieben Rundballen auf die Lagerfläche 7 aufgegeben werden können. Am selben Ende der Lagerfläche 7 weist die Transporteinrichtung 1 ein Anbindungselement 9 zur Koppelung der Transporteinrichtung 1 mit einem Nutzfahrzeug, etwa einem Traktor, auf. Auf dem der Aufgabeeinheit 10 entgegengesetzten Ende der Lagerfläche 7 weist die Transporteinrichtung 1 eine weitere Aufgabeeinheit 10' auf, welche im Aufbau der Aufgabeeinheit 10 gleicht. In der Folge wird daher lediglich die Funktionsweise der Aufgabeeinheit 10 näher erläutert.

Die Fördereinheit 6 erstreckt sich in einer Längsrichtung 8 der Transporteinrichtung 1 und dient dazu, mittels der Aufgabeeinheit 10 auf die Lagerfläche 7 aufgegebene Rundballen von dem die Aufgabeeinheit 10 aufweisenden Ende der Lagerfläche 7 in Richtung des der Aufgabeeinheit 10 entgegengesetzten Endes der Lagerfläche 7, also in anderen Worten in Längsrichtung 8, zu fördern. Somit kann einerseits eine größere Anzahl von Rundballen in einfacher Art und Weise von der Transporteinrichtung 1 aufgenommen werden, andererseits kann die Gefahr einer Beschädigung der Hüllfolie der Rundballen durch den schonenden Transport mittels der Fördereinheit 6 vermindert werden. Auch eine Förderung in Gegenrichtung, also in Richtung der Aufgabeeinheit 10 ist möglich. Zusätzlich dazu kann die gesamte Lagerfläche 7 theoretisch mit einer einzigen, endseitig angeordneten Aufgabeeinheit 10 beschickt werden.

Die Seitenwände 4 des käfigartigen Überbaus 2 bestehen im vorliegenden Ausführungsbeispiel aus Vertikal-Trägern, Vertikalstreben und Querstreben. An den Vertikalstreben sind Führungsrollen 19, der Übersichtlichkeit halber sind jeweils nur zwei davon mit einem Bezugszeichen versehen, angebracht, deren Längsachse normal zur Lagerfläche 6 ausgerichtet sind, um die in der Transporteinrichtung 1 geförderten bzw. gelagerten Rundballen vor einer Verletzung der Hüllfolie zu schützen und die Rundballen während der Förderung bzw. der Lagerung in seitlicher Richtung abzustützen. An der Unterseite des Rahmengestells 3 sind im vorliegenden Ausführungsbeispiel zwei Radsätze 21 angebracht, sodass die Transporteinrichtung 1 beispielsweise als Anhänger von einem über das Anbindungselement 9 gekoppelten Zugfahrzeug transportierbar ist.

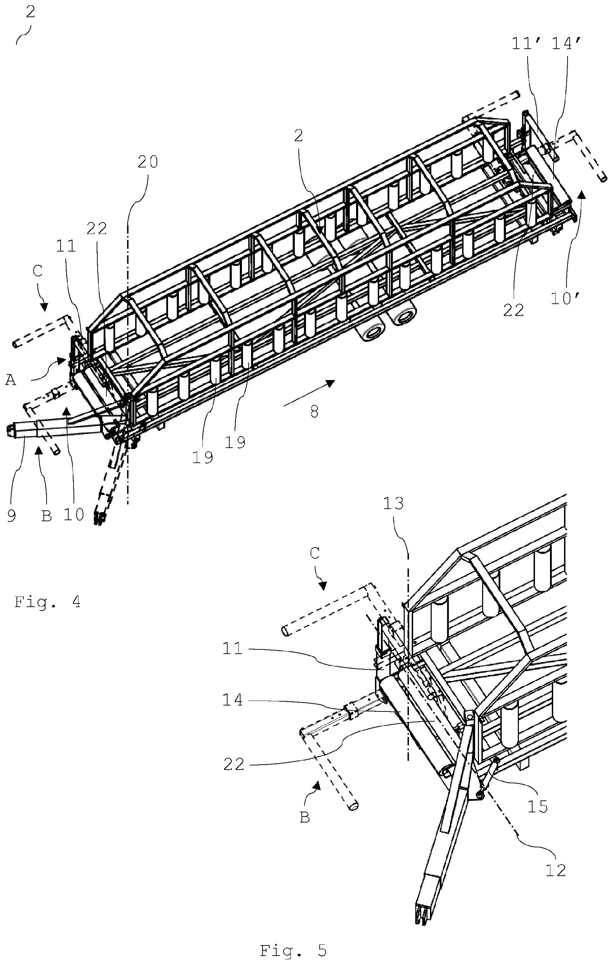

Figur 4 zeigt eine dreidimensionale Darstellung der Transporteinrichtung 1 bei der, wie auch in den Figuren 2 und 3, ein Umlauffördermittel, im vorliegenden Fall ein Gurt, der Fördereinheit 6 nicht dargestellt ist. Daher ist die Lagerfläche 7 an sich nicht erkennbar, jedoch ist dadurch einerseits das unterhalb des Umlauffördermittels liegende Rahmengestell 3 und andererseits die Antriebsrollen 22 der Fördereinheit 6, zwischen denen das Umlauffördermittel gespannt ist, sichtbar. Es versteht sich jedoch von selbst, dass die Lagerfläche 7 durch eine gemeinsame Tangentialebene der beiden Antriebsrollen 22 gebildet wird, die knapp oberhalb des Rahmengestells 3 verläuft.

Deutlich zu erkennen ist in Figur 4 auch, dass das Anbindungselement 9 um eine Anbindungsachse 20 schwenkbar an die Transporteinrichtung 1, im vorliegenden Fall an den käfigartigen Überbau 2, genauer an eine der Seitenwände 4, angebunden ist, wobei eine zweite Position des verschwenkten Anbindungselements 9 strichliert dargestellt ist. Die Anbindungsachse 20 ist normal zur Lagerfläche 7 ausgerichtet bzw. verläuft parallel zu einer Höhenrichtung der Transporteinrichtung 1. Durch die seitliche Anbindung des Anbindungselements 9 an den käfigartigen Überbau 2 kann die Transporteinrichtung 1 in einfacher Art und Weise um die Anbindungsachse 20 gegenüber einem Nutzfahrzeug verschwenkt werden, sodass die Aufgabeeinheit 10 relativ zu einem auf dem Untergrund befindlichen Rundballen positionierbar ist, um den Rundballen auf die Lagerfläche 7 aufzugeben. Um diese Schwenkbewegung um die Anbindungsachse 20 zu unterstützen, ist ein Hydraulikzylinder 15 (siehe Fig. 1 und 5) zwischen dem käfigartigen Überbau 2 und dem Anbindungselement 9 angeordnet.

Insbesondere anhand von Figur 5, die eine Detaildarstellung der Aufgabeeinheit 10 aus Fig. 3 darstellt, sowie anhand der vorhergegangenen Figuren soll die Funktionsweise der Aufgabeeinheit 10 bzw. der analog aufgebauten weiteren Aufgabeeinheit 10' erläutert werden. Die Aufgabeeinheit 10 umfasst einen L-förmigen Schwenkarm 11, der um eine erste Schwenkachse 12 schwenkbar an der Transporteinrichtung 1 angebunden ist. Die erste Schwenkachse 12 verläuft dabei parallel zur Lagerfläche 7 und normal zur Längsrichtung 8. Der L-förmige Schwenkarm 11 weist einen ersten Schenkel auf, der parallel zur ersten Schwenkachse 12 ausgerichtet ist, und einen zweiten Schenkel, der den ersten Schenkel mit der ersten Schwenkachse 12 verbindet. Wie insbesondere in Fig. 3 zu erkennen ist, ist der erste Schenkel des Schwenkarms 11 als Querstange 18 mit einer kreiszylindrischen Form ausgebildet. Der zweite Schenkel ist durch ein erstes Teleskopelement 16 und ein zweites Teleskopelement 17 gebildet, welche einen rechteckigen Querschnitt aufweisen und ineinander verschiebbar bzw. auseinander schiebbar ausgebildet sind. Die beiden Teleskopelemente 16,17 sind in mehreren Positionen relativ zueinander fixierbar, beispielsweise über Bolzen oder Stifte. Durch die teleskopartige Ausbildung des zweiten Schenkels ist der Abstand der Querstange 18 von der ersten Schwenkachse 12 variierbar.

Um die erste Schwenkachse 12 ist der Schwenkarm von einer Aufgabeposition A, die in allen Figuren als durchgezogene Linie dargestellt ist, in eine Greifposition B, die als strichlierte Linie dargestellt ist, bzw. umgekehrt verschwenkbar. Diese Schwenkbewegung wird insbesondere bei der Aufgabe eines Rundballens auf die Lagerfläche 7 durchgeführt. Dabei ist ein Rundballen in der Aufgabeeinheit 10 angeordnet, wobei sich der Schwenkarm 11 in der Greifposition B befindet und die Querstange 18 einen der Lagerfläche 7 abgewandten Abschnitt der Mantelfläche des Rundballens kontaktiert. Während der Schwenkarm 11 in die Aufgabeposition A bewegt wird, stützt sich der Rundballen auf einer Rolle 14 der Aufgabeeinheit 10 ab, die parallel zur ersten Schwenkachse 12 ausgerichtet ist, und an der der Rundballen abrollen kann. Von der Rolle 14 gelangt der Rundballen, spätestens in der Aufgabeposition A, in der der zweite Schenkel des Schwenkarms 11 einen rechten Winkel mit der Lagerfläche 7 einschließt, auf die Lagerfläche 7 und ist mittels der Fördereinheit 6 in Längsrichtung 8 förderbar.

Da die Querstange 18 des Schwenkarms 11 den Rundballen in der Greifposition B untergreifen muss, um ihn anheben zu können, ist eine Bewegung von der Aufgabeposition A in die Greifposition B im vorliegenden Ausführungsbeispiel nicht möglich, wenn bereits ein Rundballen vor der Aufgabeeinheit 10 positioniert ist, da die Schwenkbewegung durch den Rundballen blockiert ist. Daher ist der Schwenkarm 11 um eine zweite Schwenkachse 13, die normal zur ersten Schwenkachse 12 steht, schwenkbar, um den Schwenkarm 11 von einer Aufnahmeposition C (ebenfalls strichliert eingezeichnet) in die Greifposition B zu verschwenken.

In der Aufnahmeposition C ist der Schwenkarm 11 seitlich zur Lagerfläche 7 ausgeschwenkt, wobei in den dargestellten Figuren beide Schenkel des Schwenkarms 11 parallel zur Förderfläche 7 ausgerichtet sind, und der zweite Schenkel darüber hinaus parallel zur ersten Schwenkachse 12 ausgerichtet ist. Somit ist die Transporteinrichtung 1 in einfacher Weise relativ zum Rundballen positionierbar, wenn sich der Schwenkarm 11 in der Aufnahmeposition C befindet. Von der Aufnahmeposition C lässt sich der Schwenkarm 11 ohne durch den Rundballen blockiert zu werden in die Greifposition B verschwenken. Die zweite Schwenkachse 13 ist im dargestellten Ausführungsbeispiel in der Aufnahmeposition C und der Greifposition B normal zur Lagerfläche 7 ausgerichtet, während sie in der Aufgabeposition A des Schwenkarms 11, nach Verschwenkung um die erste Schwenkachse 12, parallel zur Lagerfläche 7 ausgerichtet ist. Das Verschwenken um die Schwenkachsen 12,13 erfolgt dabei über Hydraulikzylinder 15 (siehe Fig. 1 und Fig. 3).

Zur Aufnahme eines Rundballens in die Transporteinrichtung 1 wird im vorliegenden Ausführungsbeispiel folgendermaßen vorgegangen: Der Schwenkarm wird von der Aufgabeposition A in die Greifposition B und von der Greifposition B in die Aufnahmeposition C verschwenkt. Danach wird ein Rundballen in der Aufgabeeinheit 10 positioniert, oder die Transporteinrichtung 1 wird relativ zu einem Rundballen ausgerichtet, sodass der Rundballen vor der Aufgabeeinheit 10 angeordnet ist. Anschließend wird der Schwenkarm 11 von der Aufnahmeposition C in die Greifposition B verschwenkt, in der die Querstange 18 den Rundballen untergreift, und von der Greifposition B mit dem Rundballen in die Aufgabeposition A verschwenkt.

Die weitere Aufgabeeinheit 10' ist, wie bereits zuvor erwähnt, analog zur oben beschriebenen Aufgabeeinheit 10 ausgebildet und weist daher einen weiteren Schwenkarm 11' und eine weitere Rolle 14', welche nach dem selben Prinzip zusammenwirken, wie bei der Aufgabeeinheit 10 beschrieben wurde.

Um das Hinunterfallen der Rundballen von der Lagerfläche 7 in Längsrichtung 8 während des Transports zu verhindern, bildet der Schwenkarm 11 der Aufgabeeinheit 10 bzw. der weitere Schwenkarm 11' der weiteren Aufgabeeinheit 10' in der jeweiligen Aufgabeposition A eine Rundballensperre aus. Dabei versperrt die Querstange 18 die im käfigartigen Überbau 2 gebildete Öffnung zur Aufnahme der Rundballen schrankenartig.

Es versteht sich von selbst, dass die Fördereinheit 6 nicht wie im abgebildeten Ausführungsbeispiel mittels einer Antriebseinheit antreibbar sein muss, sondern auch antriebslos ausgebildet sein kann. So ist es in einer alternativen Ausführungsvariante denkbar, dass die Fördereinheit 6 als eine Rollenbahn mit einer Vielzahl an in Längsrichtung 8 voneinander beabstandeten Förderrollen, deren Längsachsen normal zur Längsrichtung 8 ausgerichtet sind, ausgebildet ist. Die gezeigten Winkelpositionen der Aufgabeposition A, der Greifposition B und der Aufnahmeposition C sind dabei exemplarisch zu verstehen, da der Fachmann aus der Anordnung der Schwenkachsen 12, 13 zueinander eine Vielzahl an möglichen Winkelpositionen abzuleiten vermag, mittels derer die Aufgabe eines Rundballens auf die Lagerfläche möglich ist.

### BEZUGSZEICHENLISTE

- 1: Transporteinrichtung
- 2: käfigartiger Überbau
- 3: Rahmengestell
- 4: Seitenwand des Überbaus 2
- 5: Querträger des Überbaus 2
- 6: Fördereinheit
- 7: Lagerfläche
- 8: Längsrichtung
- 9: Anbindungselement
- 10: Aufgabeeinheit
- 10': weitere Aufgabeeinheit
- 11: Schwenkarm
- 11': weiterer Schwenkarm
- 12: erste Schwenkachse
- 13: zweite Schwenkachse
- 14: Rolle
- 14': weitere Rolle
- 15: Hydraulikzylinder
- 16: erstes Teleskopelement
- 17: zweites Teleskopelement
- 18: Querstange
- 19: Führungsrollen
- 20: Anbindungsachse
- 21: Radsatz
- 22: Antriebsrolle
- A: Aufgabeposition
- B: Greifposition
- C: Aufnahmeposition

## Patentansprüche

1. Transporteinrichtung (1) für Rundballen, umfassend eine sich in einer Längsrichtung (8) erstreckende, eine Lagerfläche (7) für die Rundballen bildende Fördereinheit (6), vorzugsweise einen Umlaufförderer oder eine Rollenbahn, mit einem käfigartigen Überbau (2) zur Aufnahme mehrerer Rundballen und ein Anbindungselement (9) zur Koppelung der Transporteinrichtung (1) mit einem, vorzugsweise landwirtschaftlichen, Nutzfahrzeug, wobei die Transporteinrichtung (1) eine an einem Ende der Lagerfläche (7) angeordnete schwenkbare Aufgabeeinheit (10) aufweist, mittels welcher Aufgabeeinheit (10) ein Rundballen auf die Lagerfläche (7) aufgebbar ist, und wobei ein auf der Lagerfläche (7) befindlicher Rundballen mittels der Fördereinheit (6) in Richtung des der Aufgabeeinheit (10) entgegengesetzten Endes der Lagerfläche (7) förderbar ist, wobei die Aufgabeeinheit (10) einen L-förmigen Schwenkarm (11) aufweist, welcher Schwenkarm (11) um eine parallel zur Lagerfläche (7) und normal zur Längsrichtung (8) verlaufende erste Schwenkachse (12) von einer Greifposition (B) zum Untergreifen eines Rundballens in eine Aufgabeposition (A) zur Aufgabe des untergriffenen Rundballens auf die Lagerfläche (7) schwenkbar ist, wobei ein erster Schenkel des L-förmigen Schwenkarms parallel zur ersten Schwenkachse ausgerichtet ist, **dadurch gekennzeichnet, dass** der Schwenkarm (11) um eine normal zur ersten Schwenkachse (12) ausgerichtete zweite Schwenkachse (13) von einer Aufnahmeposition (C), in der der Schwenkarm (11) seitlich zur Förderfläche (7) ausgeschwenkt ist, in die Greifposition (B) schwenkbar ist.

2. Transporteinrichtung (1) nach Anspruch 1, **dadurch gekennzeichnet, dass** an den Seitenwänden (4) des käfigartigen Überbaus (2) senkrecht zur Lagerfläche (7) ausgerichtete Führungsrollen (19) angeordnet sind.

3. Transporteinrichtung (1) nach Anspruch 1 oder 2, **dadurch gekennzeichnet, dass** das Anbindungselement (9) um eine normal zur Lagerfläche (7) ausgerichtete Anbindungsachse (20) schwenkbar an der Transporteinrichtung (1) angebunden ist.

4. Transporteinrichtung (1) nach einem der Ansprüche 1 bis 3, **dadurch gekennzeichnet, dass** die Aufgabeeinheit (10) eine parallel zur ersten Schwenkachse (12) ausgerichtete Rolle (14) zum Abrollen des Rundballens während des Aufgabevorgangs aufweist.

5. Transporteinrichtung (1) nach einem der Ansprüche 1 bis 4, **dadurch gekennzeichnet, dass** der Schwenkarm (11) zumindest zwei teleskopartig ineinander schiebbare Teleskopelemente (16,17) umfasst.

6. Transporteinrichtung (1) nach einem der Ansprüche 1 bis 5, **dadurch gekennzeichnet, dass** der Schwenkarm (11) in der Aufgabeposition eine Rundballensperre ausbildet.

7. Transporteinrichtung (1) nach einem der Ansprüche 1 bis 6, **dadurch gekennzeichnet, dass** die Aufgabeeinheit (10) pro Schwenkachse (12,13) zumindest einen Hydraulikzylinder (15) aufweist um den Schwenkarm (11) um die erste (12) und/oder zweite Schwenkachse (13) zu schwenken.

8. Transporteinrichtung (1) nach einem der Ansprüche 1 bis 7, **dadurch gekennzeichnet, dass** an dem der Aufgabeeinheit (10) gegenüberliegenden Ende der Lagerfläche (7) eine weitere Aufgabeeinheit (10') angeordnet ist.

## Claims

1. Transport device (1) for round bales, comprising a conveying unit (6) extending in a longitudinal direction (8), forming a storage surface (7) for the round bales, preferably a rotary conveyor or a roller track, having a cage-like superstructure (2) for receiving a plurality of round bales and a connection element (9) for coupling the transport device (1) with a preferably agricultural utility vehicle, wherein the transport device (1) has a delivery unit (10), that is able to be swivelled, disposed at one end of the storage surface (7), by means of which delivery unit (10) a round bale can be delivered onto the storage surface (7), and wherein a round bale located on the storage surface (7) can be conveyed by means of the conveying unit (6) in the direction of the end of the storage surface (7) located opposite the delivery unit (10), wherein the delivery unit (10) has an L-shaped swivel arm (11), which swivel arm (11) can be swivelled about a first swivel axis (12), extending parallel to the storage surface (7) and normal to the longitudinal direction (8), from a gripping position (B) for gripping under a round bale into a delivery position (A) for the delivery of the round bale, gripped from below, onto the storage surface (7), wherein a first leg of the L-shaped swivel arm is aligned parallel to the first swivel axis, **characterised in that** the swivel arm (11) can be swivelled out about a second swivel axis (13) aligned normal to the first swivel axis (12) from an uptake position (C) in which the swivel arm (11) can be swivelled out laterally to the conveying surface (7), into the gripping position (B).

2. Transport device (1) according to claim 1, **characterised in that**, at the side walls (4) of the cage-like superstructure (2), guide rollers (19) are disposed aligned perpendicularly to the storage surface (7).

3. Transport device (1) according to claim 1 or 2, **characterised in that** the connection element (9) is connected to the transport device (1) able to be swivelled about a connection axis (20) aligned normal to the storage surface (7).

4. Transport device (1) according to any of claims 1 to 3, **characterised in that** the delivery unit (10) has a roller (14) aligned parallel to the first swivel axis (12) for rolling off the round bale during the delivery procedure.

5. Transport device (1) according to any of claims 1 to 4, **characterised in that** the swivel arm (11) comprises at least two telescopic elements (16,17) which can be slid telescopically into one another.

6. Transport device (1) according to any of claims 1 to 5, **characterised in that** the swivel arm (11), in the delivery position, forms a round bale barrier.

7. Transport device (1) according to any of claims 1 to 6, **characterised in that** the delivery unit (10) has at least one hydraulic cylinder (15) per swivel axis (12,13), in order to swivel the swivel arm (11) about the first (12) and/or second swivel axis (13).

8. Transport device (1) according to any of claims 1 to 7, **characterised in that** a further delivery unit (10') is disposed at the end of the storage surface (7) opposite to the delivery unit (10).

## Revendications

1. Dispositif de transport (1) pour balles rondes, comprenant une unité de convoyage (6) s'étendant dans une direction longitudinale (8), formant une surface de stockage (7) pour les balles rondes, de préférence un convoyeur sans fin ou un convoyeur à rouleaux, avec une superstructure (2) en forme de cage pour la réception de plusieurs balles rondes et un élément de liaison (9) pour le couplage du dispositif de transport (1) à un véhicule utilitaire, de préférence agricole, dans lequel le dispositif de transport (1) présente une unité de chargement (10) pivotante agencée à une extrémité de la surface de stockage (7), au moyen de laquelle unité de chargement (10), une balle ronde peut être chargée sur la surface de stockage (7), et dans lequel une balle ronde se trouvant sur la surface de stockage (7) peut être convoyée au moyen de l'unité de convoyage (6) en direction de l'extrémité de la surface de stockage (7) opposée à l'unité de chargement (10), dans lequel l'unité de chargement (10) présente un bras pivotant en forme de L (11), lequel bras pivotant (11) peut pivoter autour d'un premier axe de pivotement (12) s'étendant parallèlement à la surface de stockage (7) et perpendiculairement à la direction longitudinale (8) d'une position de préhension (B) pour la prise par dessous d'une balle ronde à une position de chargement (A) pour le chargement de la balle ronde prise par dessous sur la surface de stockage (7), dans lequel une première branche du bras pivotant en forme de L est orienté parallèlement au premier axe de pivotement, **caractérisé en ce que** le bras pivotant (11) est pivotant autour d'un deuxième axe de pivotement (13) orienté perpendiculairement au premier axe de pivotement (12) d'une position de réception (C), dans laquelle le bras de pivotement (11) est déporté latéralement par rapport à la surface de transport (7), à la position de préhension (B).

2. Dispositif de transport (1) selon la revendication 1, **caractérisé en ce que** des rouleaux de guidage (19) orientés perpendiculairement à la surface de stockage (7) sont agencés au niveau de parois latérales (4) de la superstructure en forme de cage (2).

3. Dispositif de transport (1) selon la revendication 1 ou 2, **caractérisé en ce que** l'élément de liaison (9) est relié au dispositif de transport (1) de manière pivotante autour d'un axe de liaison (20) orienté perpendiculairement à la surface de stockage (7).

4. Dispositif de transport (1) selon l'une quelconque des revendications 1 à 3, **caractérisé en ce que** l'unité de chargement (10) présente un rouleau (14) orienté parallèlement au premier axe de pivotement (12) pour le roulement de la balle ronde pendant l'opération de chargement.

5. Dispositif de transport (1) selon l'une quelconque des revendications 1 à 4, **caractérisé en ce que** le bras pivotant (11) comprend au moins deux éléments télescopiques (16, 17) insérables l'un dans l'autre de manière télescopique.

6. Dispositif de transport (1) selon l'une quelconque des revendications 1 à 5, **caractérisé en ce que** le bras pivotant (11) forme un blocage de balle ronde dans la position de chargement.

7. Dispositif de transport (1) selon l'une quelconque des revendications 1 à 6, **caractérisé en ce que** l'unité de chargement (10) présente au moins un vérin hydraulique (15) par axe de pivotement (12, 13) pour faire pivoter le bras pivotant (11) autour du premier (12) et/ou deuxième axe de pivotement (13).

8. Dispositif de transport (1) selon l'une quelconque des revendications 1 à 7, **caractérisé en ce qu'**une autre unité de chargement (10') est agencée à l'extrémité de la surface de stockage (7) opposée à l'unité de chargement (10).
